(19) Europäisches Patentamt
European Patent Office
Office européen des brevets

(11) **EP 1 210 804 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(51) Int Cl.:
***H04L 25/14*** *(2006.01)*

(21) Anmeldenummer: **00967547.1**

(22) Anmeldetag: **04.09.2000**

(86) Internationale Anmeldenummer:
**PCT/DE2000/003097**

(87) Internationale Veröffentlichungsnummer:
**WO 2001/019044 (15.03.2001 Gazette 2001/11)**

(54) **VORRICHTUNG UND VERFAHREN ZUM LAUFZEITAUSGLEICH**

DEVICE AND METHOD FOR COMPENSATING FOR PROPAGATION DELAY

PROCEDE ET DISPOSITIF DE COMPENSATION DU TEMPS DE PARCOURS

(84) Benannte Vertragsstaaten:
**DE FR GB**

(30) Priorität: **03.09.1999 DE 19943739**

(43) Veröffentlichungstag der Anmeldung:
**05.06.2002 Patentblatt 2002/23**

(73) Patentinhaber: **Infineon Technologies AG
81669 München (DE)**

(72) Erfinder: **SCHRÖDINGER, Karl
14089 Berlin (DE)**

(74) Vertreter: **Müller, Wolfram Hubertus et al
Patentanwälte
Maikowski & Ninnemann
Postfach 15 09 20
10671 Berlin (DE)**

(56) Entgegenhaltungen:
**EP-A- 0 533 091          EP-A- 0 593 206
US-A- 4 818 995**

• **JEONG G ET AL: "LONG-DISTANCE PARALLEL
DATA LINK USING WDM TRANSMISSION WITH
BIT- SKEW COMPENSATION" JOURNAL OF
LIGHTWAVE TECHNOLOGY, Bd. 14, Nr. 5, 1. Mai
1996 (1996-05-01), Seiten 655-660, XP000598716
IEEE, NEW YORK,NY,US ISSN: 0733-8724**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Ausgleich von Laufzeitunterschieden zwischen n seriellen Datenströmen (n = 2, 3,...), die jeweils über parallele, optische Leitungen übertragen werden, wobei mittels der n seriellen Datenströme übertragbare Daten als m-Bit-Worte (m = 1, 2, ...) ausgebildet sind.

Zur optischen Übertragung von Informationen bzw. Daten können Kabel benutzt werden, die mehrere optische Leitungen umfassen. Die Leitungen sind hierbei als einzelne Glasfasern ausgebildet. Bei der parallelen, optischen Übertragung der Daten über mehrere Glasfasern, die zu einem Kabel zusammengefaßt sind, weisen die zu übertragenden Signale in den einzelnen Glasfasern unterschiedliche Verzögerungen auf. Diese Verzögerungen sind physikalisch bedingt. Es handelt sich insbesondere um Laufzeitstreuungen wegen Wellenlängendifferenzen oder Fertigungstoleranzen, die bei der Herstellung der Glasfasern entstehen. Hierdurch wird die maximale für eine Übertragung nutzbare Länge der Glasfasern sehr eingeschränkt. Die maximale Länge ist bei der Übertragung von Datenraten von 1,3 GBd beispielsweise kürzer als 100 m.

Um Laufzeitunterschiede zu vermeiden, die sich aufgrund der Fertigungstoleranzen bei der Herstellung der Glasfasern ergeben, werden die hergestellten Glasfasern einzeln vermessen und dann so ausgewählt, daß nur Glasfasern mit ähnlichen Übertragungseigenschaften gemeinsam in einem Kabel Verwendung finden.

Die EP-A-533 091 beschreibt ein Verfahren zur parallelen Übertragung von Daten, wobei eine Vielzahl von 1 bis P parallelen Datenkanälen auf der Senderseite mittels einer Multiplexeinrichtung jeweils als ein serieller Datenstrom umgewandelt und anschließend zur Empfängerseite übertragen werden, an der die seriellen Daten wieder entsprechend demultiplext werden. Dieses System weist eine Laufzeitausgleichseinrichtung auf, die die seriellen Daten synchronisiert.

Im Artikel "Long-Distance Parallel Data Link Using WDM Transmission with Bit-Skew Compensation"' aus dem Journal of Lightwave Technology, Vol.14, No.5, Mai 1996 beschreiben Jeong G. et al. als Alternative zu rein seriellen Datenübertragungssystemen für Langstrecken (>>10km) ein paralleles WDM-Datenübertragungssystem mit einer Laufzeitausgleichseinrichtung. Nachteilhaft an der offenbarten Methode des Laufzeitausgleichs zwischen den parallelen optischen Datenkanälen ist, dass eine Einzelvermessung der Laufzeitunterschiede zwischen den unterschiedlichen parallelen Übertragungskanälen notwendig ist.

Aufgabe der vorliegenden Erfindung ist es, eine Vorrichtung zum Ausgleich der beschriebenen Laufzeitstreuungen zu schaffen, die insbesondere keine separate Laufzeitcharakterisierung der parallelen Übertragungskanäle erfordert.

Diese Aufgabe wird bei einer Vorrichtung nach dem Oberbegriff des Anspruchs 1 dadurch gelöst,

- daß mit Hilfe der jeweiligen Regenerierungseinrichtungen Daten und ein Takt des Datenstroms regeneriert werden, der über die parallelen, optischen Leitungen an den jeweiligen Eingang übertragen wird;
- daß jeweils ein Datenausgang und ein Taktausgang der Regenerierungseinrichtungen mit Laufzeitsteuereinrichtungen verbunden sind, so daß die regenerierten Daten und der regenerierte Takt jeweils auf einen Dateneingang bzw. einen Takteingang der Laufzeitsteuereinrichtungen gegeben werden; und
- daß die Laufzeitsteuereinrichtungen jeweils einen Demultiplexer zum Teilen der regenerierten Daten und der regenerierten Takte im Verhältnis 1:(x·m) (x = 1, 2,...) und eine Ausrichtereinrichtung zum Verteilen der geteilten, regenerierten Daten auf jeweils x·m parallele Datenausgänge der Laufzeitsteuereinrichtungen umfassen, wobei an einem Taktausgang wenigstens einer der Laufzeitsteuereinrichtungen ein geteilter, regenerierter Takt ausgegeben wird, welcher mit den geteilten, regenerierten Daten synchronisiert ist.

Ein wesentlicher Vorteil der Erfindung besteht darin, daß eine Möglichkeit geschaffen ist, mit der Laufzeitstreuungen ausgeglichen werden können, die bei der übertragung mittels paralleler, optischer Leitungen auftreten. Hierdurch können im Vergleich zu bekannten Übertragungsstrecken wesentlich längere Übertragungsstrecken genutzt werden. Es ergeben sich hieraus neue Anwendungsmöglichkeiten für die Nutzung der optischen Signale zur Informationsübertragung.

Ein weiterer Vorteil besteht darin, daß eine Vermessung und eine Auswahl hergestellter Glasfasern, die in einem Glasfaserkabel gemeinsam verwendet werden sollen, nicht notwendig ist, da beliebige Laufzeitunterschiede mit Hilfe der erfindungsgemäßen Vorrichtung ausgeglichen werden können.

Eine zweckmäßige Ausgestaltung der Erfindung sieht vor, daß die n Regenerierungseinrichtungen jeweils als eine Taktregenerierungseinrichtung ausgebildet sind, wodurch für jede der parallelen, optischen Leitungen eine getrennte Taktregenerierung möglich ist.

Bei einer Weiterbildung der Erfindung ist vorgesehen, daß eine der n Regenerierungseinrichtung als eine Taktregenerierungseinrichtung ausgebildet ist und daß n-1 Regenerierungseinrichtungen jeweils als Phasenregenerierungseinrichtungen ausgebildet sind, wobei der Taktausgang der Taktregenerierungseinrichtung mit einem jeweiligen Takteingang der n-1 Phasenregenerierungseinrichtungen verbunden ist. Hierdurch ist die Einsparung von n-1 Taktgeneratoren möglich, da in den n-1 Phasenregenerierungseinrichtungen lediglich eine Anpassung der Phase erfolgt, wobei der mit Hilfe der Taktregenerierungseinrichtung regenerierte Takt genutzt wird.

Eine zweckmäßige Fortbildung der Erfindung ist durch n Multiplexereinrichtungen zum Umwandeln der geteilten, regenerierten Daten in einen jeweiligen seriellen, regenerierten Datenstrom und einen Synthesizer gekennzeichnet, wobei die x·m parallelen Datenausgänge der Laufzeitsteuereinrichtungen jeweils mit x·m parallelen Dateneingängen der n Multiplexereinrichtungen verbunden sind, wobei der Eingang des Synthesizers mit einem jeweiligen Takteingang der Multiplexereinrichtungen und dem Taktausgang der wenigstens einen Laufzeitsteuereinrichtung verbunden ist, und wobei ein Ausgang des Synthesizers mit einem jeweilige Takteingang der Multiplexereinrichtungen verbunden ist. Hierdurch ist es möglich, die parallelen Daten, die hinsichtlich der Laufzeitstreuungen ausgeglichen wurden, zur Weiterverarbeitung in einen seriellen Datenstrom umzuwandeln.

Zweckmäßig kann vorgesehen sein, daß wenigstens eine der n Multiplexereinrichtungen einen seriellen Taktausgang aufweist, wobei über den seriellen Taktausgang ein weiteres serielles Taktsignal ausgegeben werden kann, welches an den seriellen, regenerierten Datenstrom angepaßt und hinsichtlich eines mittels des Synthesizers erzeugbaren, seriellen Taktsignals verzögert ist. Hierdurch kann ein serielles Taktsignal zur Verfügung gestellt werden, das für die Weiterverarbeitung des seriellen, regenerierten Datenstroms nutzbar ist.

Um das Dekodieren der Daten zu ermöglichen, kann vorgesehen sein, daß zwischen den Laufzeitsteuereinrichtungen und den Multiplexereinrichtungen jeweils eine Dekodiereinrichtung gekoppelt ist.

Das Verfahren weist die im Zusammenhang mit den zugehörigen Vorrichtungsansprüchen aufgezählten Vorteile entsprechend auf.

Die Erfindung wird im Folgenden anhand eines Ausführungsbeispiels unter Bezugnahme auf eine Zeichnung näher erläutert. Hierbei zeigen:

Figur 1   ein Blockschaltbild einer Vorrichtung zum Laufzeitausgleich, wobei getrennte Taktregenerierungseinrichtungen vorgesehen sind;

Figur 2   eine weitere Vorrichtung zum Laufzeitausgleich, wobei eine Taktregenerierungseinrichtung und mehrere Phasenregenerierungseinrichtungen vorgesehen sind; und

Figur 3   ein Signaldiagramm.

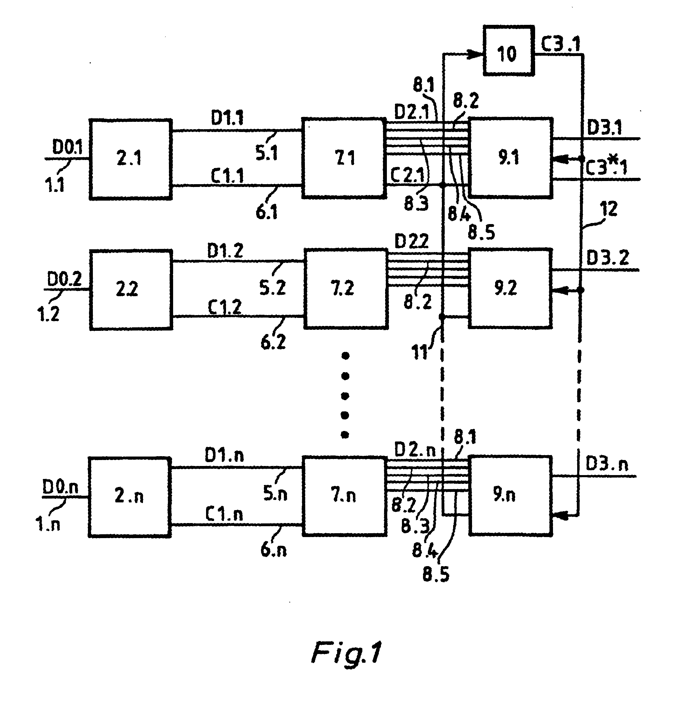

Gemäß Figur 1 sind parallele, optische Leitungen 1.n (n = 1, 2, ...) jeweils mit einer Taktregenerierungseinrichtung 2.n verbunden. Über die optischen Leitungen 1.n werden den jeweiligen Taktregenerierungseinrichtungen 2.n Datensignale D0.n zugeführt. Die Datensignale D0.n weisen Laufzeitstreuungen auf, d.h. sie sind unterschiedlichen Verzögerungen auf den jeweiligen optischen Leitungen 1.n ausgesetzt.

Die Datensignale D0.n werden von Wörtern gebildet, die eine beliebige Anzahl von Bits umfassen. Für das in der Zeichnung beschriebene Beispiel wird angenommen, daß die zu übertragenen Wörter 5 Bits umfassen. In den Taktregenerierungseinrichtungen 2.n werden die Daten und der Takt der Datensignale D0.n regeneriert. Es findet hierbei eine Regenerierung innerhalb der zeitlichen Breite eines Bits $T_{Bit}$ statt.

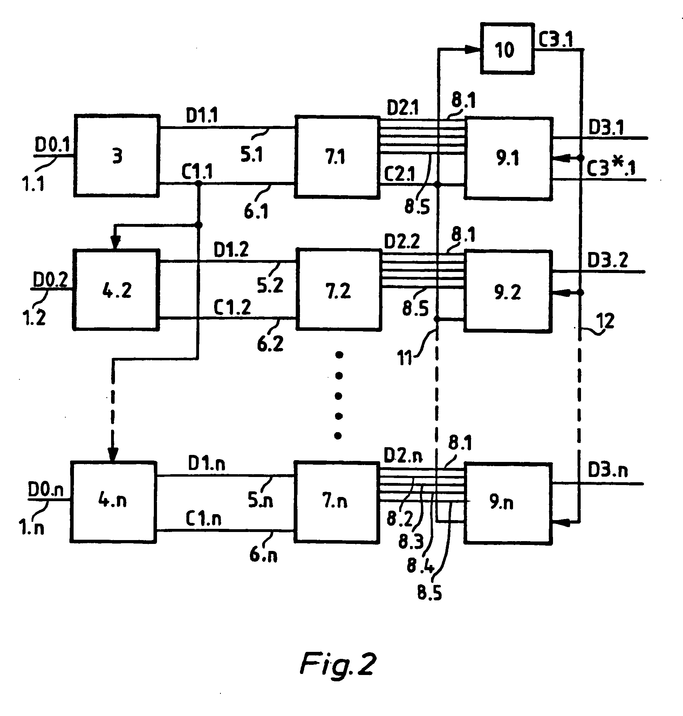

Anstelle der Taktregenerierungseinrichtungen 2.n gemäß Figur 1 kann vorgesehen sein, daß nur eine der parallelen, optischen Leitungen 1.1 mit einer Taktregenerierungseinrichtung 3 verbunden ist (vgl. Fig. 2) und daß die weiteren parallelen, optischen Leitungen 1.2...1.n jeweils mit einer Phasenregenerierungseinrichtung 4.2...4.n verbunden sind. In diesem Fall werden n-1 Taktregenerierungseinrichtungen eingespart. Der in der Taktregenerierungseinrichtung 3 regenerierte Takt reicht aus, um in den Phasenregenerierungseinrichtungen 4.2...4.n eine Regenerierung der Daten D1.n und des Taktes C1.n zu erreichen. Hierbei findet in den Phasenregenerierungseinrichtungen 4.2...4.n nur eine Justage hinsichtlich der Phase um +/- 0,5 $T_{Bit}$ statt.

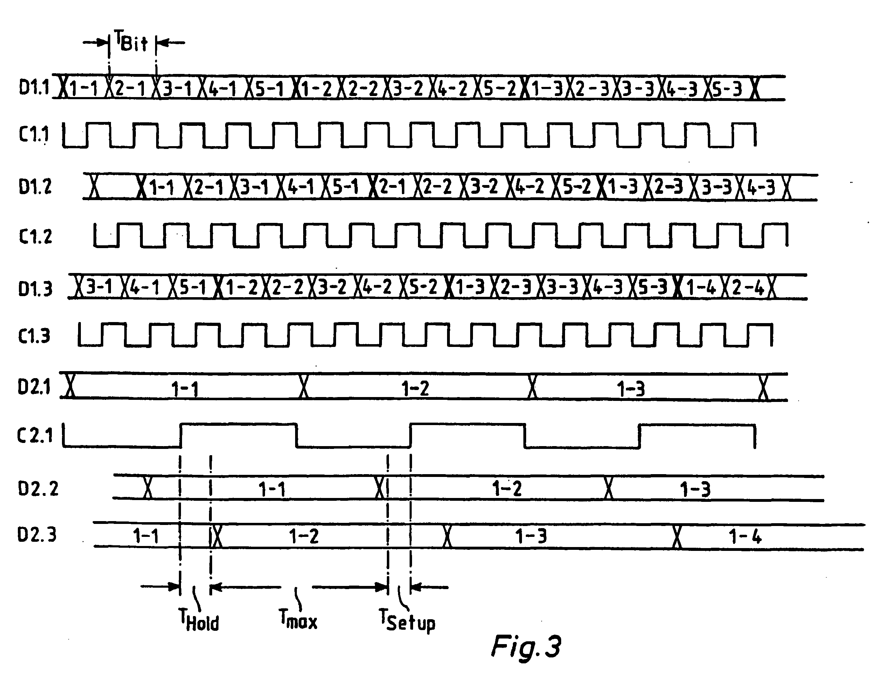

Die regenerierten Daten D1.n und der regenerierte Takt C1.n werden jeweils über Datenleitungen 5.n bzw. über Taktleitungen 6.n an eine Laufzeitsteuereinrichtung 7.n übermittelt. Die Laufzeitsteuereinrichtungen 7.n umfassen jeweils einen Demultiplexer und eine Ausrichtereinrichtung (nicht dargestellt). Mit Hilfe des jeweiligen Demultiplexers werden die regenerierten Daten D1.n und die regenerierten Takte C1.n in einem Verhältnis 1:(x·m) geteilt, wobei x=1, 2,... Im vorliegenden Fall beträgt das Verhältnis 1:5. Hierdurch entstehen geteilte, regenerierte Daten D2.n, deren Bitlänge $T_{Bit}$ gegenüber den zugeführten Daten D0.n um das (x·m)-fache verlängert ist, im vorliegenden Fall um das 5-fache. Dieses ist in Figur 3 dargestellt. Mit Hilfe der Verlängerung der Daten und der Takte wird eine zeitliche Überlappung zwischen Bits geschaffen, die ohne die Verlängerung nicht bestehen würde.

Nach dem Teilen der regenerierten Daten D1.n liegen die geteilten, regenerierten Daten D2.n als parallele Daten vor. Diese parallele Daten werden dann mit Hilfe der jeweiligen Ausrichtereinrichtung in einer vorgegebenen Ordnung auf zugehörige parallele Datenleitungen 8.n gegeben. Hierfür muß von Zeit zu Zeit ein geeignetes Muster an die Laufzeitsteuereinrichtungen 7.n übertragen werden, so daß festgelegt werden kann, welche Daten D2.n auf welche der parallelen Datenleitungen 8.n gegeben wird. Im "Fiberchannel"-Standard wird zu diesem Zweck das Wort K28.5 übermittelt. Mit diesem Wort werden die jeweiligen Demultiplexer zurückgesetzt.

Um die regenerierten, geteilten Daten D2.n wieder in ein serielles Signal umzuwandeln, werden diese Daten jeweils einem Multiplexer 9.n zugefügt. Die Multiplexer 9.n wandeln die über die parallelen Datenleitungen 8.n empfangenen geteilten, regenerierten Daten D2.n jeweils in serielle, regenerierte Daten D3.n um. Bei der Umwandlung wird ein Synthesizer 10 genutzt, um aus einem der regenerierten, geteilten Taktsignal C2.1, das den Multiplexer 7.n jeweils über eine Leitung 11 zugeführt wird, ein serielles Taktsignal C3.1 zu formen. Dieses serielle Taktsignal C3.1 wird wiederum den Multiplexern 7.n jeweils über eine weitere Leitung 12 zugeführt, so daß hieraus ein weiteres serielles Taktsignal C3*.1 gebildet werden kann, das gegenüber den seriellen, regenerierten Daten D3.n verzögert ist.

Wenn vorgesehen ist, daß die regenerierten, geteilten Daten D2.n parallel weiterverarbeitet werden sollen, dann können die Multiplexer 9.n und der Synthesizer 10 eingespart werden.

Es kann vorgesehen sein, daß zwischen die Laufzeitsteuereinrichtungen 7.n und die Multiplexer 9.n jeweils ein Dekodierer (nicht dargestellt) gekoppelt ist. Der Dekodierer paßt vorzugsweise zur Wortbreite der zu übertragenden Daten, beispielsweise kann bei 5-Bit-Wörtern ein 5B/4B-Dekoder vorgesehen sein.

Figur 3 zeigt eine schematische Darstellung eines Signaldiagramms eines Teils der regenerierten Daten D1.1, D1.2 und D1.3 sowie der zugehörigen regenerierten Takte C1.1, C1.2 und C1.3. Des weiteren sind die regenerierten, geteilten Datensignale D2.1, D2.2 und D2.3 dargestellt, wobei jeweils nur die Daten für eine der parallelen Leitungen 8.n dargestellt sind. Beispielhaft wurde jeweils die Datenleitung mit dem ersten Bit ausgewählt. Hierbei bezeichnet k-1 das k-te Bit des l-ten Wortes (k = 1, ..., 5; l = 1, 2, ...).

Figur 3 ist zu entnehmen, daß die Bitlänge $T_{Bit}$ der Daten D2.1, D2.2 und D2.3 dem 5-fachen der Bitlänge der Daten D1.1, D1.2 und D1.3 entspricht. Auch die Länge des regenerierten, geteilten Taktes C2.1 entspricht dem 5-fachen der Länge des regenerierten Taktes C1.1, C1.2 und C1.3.

Die maximale Laufzeitstreuung $T_{max}$, die mit Hilfe der in den Figuren 1 und 2 dargestellten Vorrichtungen ausgeglichen werden kann, ergibt sich im Fall eines optimal zentrierten Taktes (vgl. Fig. 3) aus:

$$T_{max} = n \cdot T_{Bit} + T_{Setup} - T_{Hold} \qquad (1)$$

Im ungünstigsten Fall der Auswahl des Taktes wird n in Gleichung (1) durch n/2 ersetzt.

Bezugszeichenliste

| | |
|---|---|
| 1.1 ... 1.n | parallele, optische Datenleitungen |
| 2.1 ... 2.n | Regenerierungseinrichtungen |
| 3 | Taktregenerierungseinrichtung |
| 4.2 ... 4.n | Phasenregenerierungseinrichtungen |
| 5.1 ... 5.n | Datenleitungen |
| 6.1 ... 6.n | Taktleitungen |
| 7.1 ... 7.n | Laufzeitsteuereinrichtungen |
| 8.1 ... 8.m | parallele Datenausgänge |
| 9.1 ... 9.n | Multiplexereinrichtungen |
| 10 | Synthesizer |
| 11 | Leitung |
| 12 | weitere Leitung |
| | |
| D0.1 ... D0.n | zugeführte Daten |
| D1.1 ... D1.n | regenerierte Daten |
| D2.1 ... D2.n | geteilte, regenerierte Daten |
| D3.1 ... D3.n | serielle Daten |
| C1.1 ... C1.n | regenerierte Takte |
| C2.1 ... C2.n | geteilte, regenerierte Takte |
| C3.1 | serielles Taktsignal |
| C3*.1 | weiteres serielles Taktsignal |

**Patentansprüche**

1.   Vorrichtung zum Ausgleich von Laufzeitunterschieden zwischen n seriellen Datenströmen (n = 2, 3,...), die jeweils über parallele, optische Leitungen (1.1 ... 1.n übertragen werden, wobei

- mittels der n seriellen Datenströme übertragbare Daten (D01.1 ... D01.n) als m-Bit-Worte (m = 1, 2, ...) ausgebildet sind,
- n Regenerierungseinrichtungen (2.1 ... 2.n) vorgesehen sind, und
- jeweils ein Eingang der Regenerierungseinrichtungen (2.1 ... 2.n) mit einer der parallelen, optischen Leitungen (1.1 ... 1.n) verbunden ist,

**dadurch gekennzeichnet,**

- **daß** mit Hilfe der jeweiligen Regenerierungseinrichtungen (2.1 ... 2.n) Daten (D1.1 ... D1.n) und ein Takt (C1.1 ... C1.n) des jeweiligen Datenstroms regeneriert werden, der über die parallelen, optischen Leitungen (1.1 ... 1.n) an den jeweiligen Eingang übertragen wird;
- **daß** jeweils ein Datenausgang und ein Taktausgang der Regenerierungseinrichtungen (2.1 ... 2.n) mit einer Laufzeitsteuereinrichtung (7.1 ... 7.n) verbunden sind, so daß die regenerierten Daten (D1.1 ... D1,n) und der regenerierte Takt (C1.1 ... C1.n) jeweils auf einen Dateneingang bzw. einen Takteingang der Laufzeitsteuereinrichtungen (7.1 ... 7.n) gegeben werden; und
- **daß** die Laufzeitsteuereinrichtungen (7.1 ... 7.n) jeweils einen Demultiplexer zum Teilen der regenerierten Daten (D1.1 ... D1.n) und der regenerierten Takte (C1.1 ... C1.n) im Verhältnis 1:(x·m) (x = 1, 2,...) und eine Ausrichtereinrichtung zum Verteilen der geteilten, regenerierten Daten (D2.1 ... D2.n) auf jeweils x·m parallele Datenausgänge (8.1 ... 8.m) der Laufzeitsteuereinrichtungen (7.1 ... 7.n) umfassen, wobei an einem Taktausgang wenigstens einer der Laufzeitsteuereinrichtungen (7.1) ein geteilter, regenerierter Takt (C2.1) ausgegeben wird, welcher mit den geteilten, regenerierten Daten (D2.1 ... D2.n) synchronisiert ist.

2. Vorrichtung nach Anspruch 1,
**dadurch gekennzeichnet, daß** die n Regenerierungseinrichtungen (2.1 ... 2.n) jeweils als eine Taktregenerierungseinrichtung ausgebildet sind.

3. Vorrichtung nach Anspruch 1,
**dadurch gekennzeichnet, daß** eine der n Regenerierungseinrichtungen als eine Taktregenerierungseinrichtung (3) ausgebildet ist und daß n-1 Regenerierungseinrichtungen jeweils als Phasenregenerierungseinrichtungen (4.2 ... 4.n) ausgebildet sind, wobei der Taktausgang der Taktregenerierungseinrichtung mit einem jeweiligen Takteingang der n-1 Phasenregenerierungseinrichtungen verbunden ist.

4. Vorrichtung nach einem der vorhergehenden Ansprüche,
**gekennzeichnet durch**:

- n Multiplexereinrichtungen (9.1 ... 9.n) zum.Umwandeln der geteilten, regenerierten Daten (D2.1 ... D2.n) in einen jeweiligen seriellen, regenerierten Datenstrom (D3.1 ... D3.n), wobei die x·m parallelen Datenausgänge (8.1 ... 8.m) der Laufzeitsteuereinrichtung jeweils mit x·m parallelen Dateneingängen der n Multiplexereinrichtungen (9.1 ... 9.n) verbunden sind; und
- einen Synthesizer (10), wobei der Eingang des Synthesizers (10) mit einem jeweiligen Takteingang der Multiplexereinrichtungen (9.1 ... 9.n) und dem Taktausgang der wenigstens einen Laufzeitsteuereinrichtung (7.1) verbunden ist, und wobei ein Ausgang des Synthesizers (10) mit einem jeweiligen weiteren Takteingang der Multiplexereinrichtungen (9.1 ... 9.n) verbunden ist.

5. Vorrichtung nach Anspruch 4,
**dadurch gekennzeichnet, daß**
wenigstens eine der n Multiplexereinrichtungen (9.1) einen seriellen Taktausgang aufweist, wobei über den seriellen Taktausgang ein weiteres serielles Taktsignal (C3*.1) ausgegeben wird, welches an den seriellen, regenerierten Datenstrom (D3.1 ... D3.n) angepaßt und hinsichtlich eines mittels des Synthesizers (10) erzeugbaren, seriellen Taktsignals (C3.1) verzögert ist.

6. Vorrichtung nach einem der Ansprüche 4-oder 5,
**dadurch gekennzeichnet, daß** zwischen den Laufzeitsteuereinrichtungen (7.1 ... 7.n) und den Multiplexereinrichtungen (9.1 ... 9.n) jeweils eine Dekodiereinrichtung gekoppelt ist.

7. Verfahren zum Ausgleich von Laufzeitunterschieden in einer Vorrichtung nach einem der vorangehenden Anspruch, wobei jeweils über parallele, optische Leitungen (1.1 ... 1.n) n serielle Datenströme (n = 2, 3,...) übertragen werden, und mittels der n seriellen Datenströme übertragbare Daten (D01.1 ... D01.n) als m-Bit-Worte (m = 1, 2, ...) ausgebildet sind, wobei das Verfahren die folgenden Verfahrensschritte aufweist:

- Empfangen von Daten (D0.1 ... **D0,n)** mit Hilfe der n Regenerierungseinrichtungen (2.1 ... 2.n bzw. 3, 4.2 ... 4.n),

**gekennzeichnet durch**

- Regenerieren der Daten und eines Takts der in der jeweiligen der n Regenerierungseinrichtung (2.1 ... 2.n bzw. 3, 4.2 ... 4.n) empfangenen Daten (D0.1 ... D0.n),
- Übermitteln der regenerierten Daten (D1.1 ... D1.2) und des regenerierten Takts (C1.1 ... C1.n) an eine jeweilige Laufzeitsteuereinrichtung (7.1 ... 7.n),
- Teilen der regenerierten Daten (D1.1 ... D1.n) und des regenerierten Takts (C1.1 ... C1.n) in einem Verhältnis 1:(x·m) (x = 1, 2,...) mittels eines jeweiligen Demultiplexers, und
- Verteilen der geteilten, regenerierten Daten (D2.1 ... D2.n) auf parallele Datenausgänge (8.1 ... 8.m) der jeweiligen Laufzeitsteuereinrichtung (7.1 ... 7.n).

**Claims**

1. Device for compensating for propagation delay differences between n serial data streams (n = 2, 3,...), which are each transmitted via parallel optical lines (1.1 ... 1.n), with

   - data (D01.1 ... D01.n) which can be transmitted by means of the n serial data streams being in the form of m bit words (m = 1, 2, ...),
   - n regeneration apparatuses (2.1 ... 2.n) being provided, and
   - one input of each of the regeneration apparatuses (2.1 ... 2.n) being connected to one of the parallel optical lines (1.1 ... 1.n),

   **characterized**

   - **in that** data (D1.1 ... D1.n) and a clock (C1.1 C1.n) for the respective data stream are regenerated by means of the respective regeneration apparatuses (2.2 ... 2.n), with said data stream being transmitted via the parallel optical lines (1.1 ... 1.n) to the respective input;
   - **in that** one data output and one clock output of the regeneration apparatuses (2.1 ... 2.n) are in each case connected to a propagation delay control apparatus (7.1 ... 7.n), so that the regenerated data (D1.1 ... D1.n) and the regenerated clock (C1.1 C1. n) are respectively passed to a data input or a clock input of the propagation delay control apparatuses (7.1 .. 7.n); and
   - **in that** the propagation delay control apparatuses (7.1 ... 7.n) each have a demultiplexer for dividing the regenerated data (D1.1 ... D1.n) and the regenerated clocks (C1.1 ... C1.n) in the ratio 1: (x·m) (x = 1, 2, ...) and an alignment apparatus for distributing the divided, regenerated data (D2.1 ... D2.n) between in each case x·m parallel data outputs (8.1 ... 8.m) of the propagation delay control apparatuses (7.1 ... 7.n), wherein a divided, regenerated clock (C2.1) which is synchronized to the divided, regenerated data (D2.1 ... D2.n) is emitted at a clock output of a least one of the propagation delay control apparatuses (7.1).

2. Device according to Claim 1,
   **characterized in that** the n regeneration apparatuses (2.1 ... 2.n) are each in the form of a clock regeneration apparatus.

3. Device according to Claim 1,
   **characterized in that** one of the n regeneration apparatuses is in the form of a clock regeneration apparatus (3), and **in that** n-1 regeneration apparatuses are each in the form of phase regeneration apparatuses (4.2 ...4.n), wherein the clock output of the clock regeneration apparatus is connected to a respective clock input of the n-1 phase regeneration apparatuses.

4. Device according to one of the preceding claims,
   **characterized by**:

   - n multiplexer apparatuses (9.1 ... 9.n) for converting the divided, regenerated data (D2.1 ... D2.n) to a respective serial, regenerated data stream (D3.1 ... D3.n), wherein the x·m parallel data outputs (8.1 ... 8.m) of the propagation delay control apparatus are respectively connected to x·m parallel data inputs of the n multiplexer apparatuses (9.1 ... 9.n), and

- a synthesizer (10), wherein the input of the synthesizer (10) is connected to a respective clock input of the multiplexer apparatuses (9.1 ... 9.n) and to the clock output of the at least one propagation delay control apparatus (7.1), and wherein one output of the synthesizer (10) is connected to a respective further clock input of the multiplexer apparatuses (9.1 ... 9.n).

**5.** Device according to Claim 4,
   **characterized in that**
   at least one of the n multiplexer apparatuses (9.1) has a serial clock output, wherein a further serial clock signal (C3*.1) is emitted via the serial clock output, which further serial clock signal (C3*.1) is matched to the serial regenerated data stream (D3.1 ... D3.n) and is delayed with respect to a serial clock signal (C3.1) which can be produced by means of the synthesizer (10).

**6.** Device according to one of Claims 4 or 5,
   **characterized in that** a decoder apparatus is in each case coupled between the propagation delay control apparatuses (7.1 ... 7.n) and the multiplexer apparatuses (9.1 ... 9.n).

**7.** Method for compensating for propagation delay differences in a device according to one of the preceding claims, wherein n serial data streams (n = 2, 3,...) are transmitted via respective parallel optical lines (1.1 ... 1.n) and data (D01.1 ... D01.n) which can be transmitted by means of the n serial data streams is in the form of m-bit words (m = 1, 2, ...), with the method having the following method steps:

   - reception of data (D0.1 ... D0.n) by means of the n regeneration apparatuses (2.1 ... 2.n and 3, 4.2 ... 4.n),

   **characterized by**

   - regeneration of the data and of a clock for the data (D0.1 ... D0.n) received in the respective one of the n regeneration apparatuses (2.1 ...2.n and 3, 4.2 ...4.n),
   - transmission of the regenerated data (D1.1 ... D1.2) and of the regenerated clock (C1.1 ... C1. n) to a respective propagation delay control apparatus (7.1 ... 7.n),
   - division of the regenerated data (D1.1 ... D1.2) and of the regenerated clock (C1.1 ... C1. n) in a ratio 1:(x·m) (x = 1, 2,...) by means of a respective demultiplexer, and
   - distribution of the divided regenerated data (D2.1 ... D2.n) between parallel data outputs (8.1 ...8.m) of the respective propagation delay control apparatus (7.1 ...7.n).


**Revendications**

**1.** Dispositif pour compenser les différences de temps de propagation entre n flux de données en série (n = 2, 3, ...) qui sont à chaque fois transmis par le biais de lignes optiques parallèles (1.1, ..., 1.n),

   - des données transmissibles (D01.1, ..., D01.n) étant formées sous la forme de mots de m bits (m = 1, 2, ...) au moyen des n flux de données en série,
   - n dispositifs de régénération (2.1, ..., 2.n) étant prévus et
   - une entrée des dispositifs de régénération (2.1, ..., 2.n) étant à chaque fois reliée avec l'une des lignes optiques parallèles (1.1, ..., 1.n),

   **caractérisé en ce**

   - **que** des données (D1.1, ..., D1.n) et une horloge (C1. 1, ..., C1.n) du flux de données respectif, qui est fois transmis à l'entrée correspondante par le biais des lignes optiques parallèles (1.1, ..., 1. n), sont régénérées à l'aide des dispositifs de régénération (2.1, ..., 2.n) respectifs ;
   - **qu'**une sortie de données et une sortie d'horloge des dispositifs de régénération (2.1, ..., 2.n) sont à chaque fois reliées avec un dispositif de commande du temps de propagation (7.1, ..., 7.n) de sorte que les données (D1.1, ..., D1.n) régénérées et l'horloge (C1.1, ..., C1.n) régénérée sont respectivement délivrées sur une entrée de données ou une entrée d'horloge des dispositifs de commande du temps de propagation (7.1, ..., 7.n) ; et
   - **que** les dispositifs de commande du temps de propagation (7.1, ..., 7.n) comprennent à chaque fois un démultiplexeur pour diviser les données (D1.1, ..., D1.n) régénérées et les horloges (C1.1, ..., C1.n) régénérées dans un rapport 1: (x·m) (x = 1, 2, ...) et un dispositif d'alignement pour répartir les données (D2.1, ..., D2.n) régénérées divisées à chaque fois sur x·m sorties de données parallèles (8.1, ..., 8.m) des dispositifs de commande du temps de propagation (7.1, ..., 7.n), une horloge divisée régénérée (C2.1) étant délivrée à une sortie d'horloge d'au moins l'un des dispositifs de commande du temps de propagation (7.1), laquelle est synchronisée avec les données (D2.1, ..., D2.n) régénérées divisées.

2. Dispositif selon la revendication 1, **caractérisé en ce que** les n dispositifs de régénération (2.1, ..., 2.n) sont à chaque fois réalisés sous la forme d'un dispositif générateur d'horloge.

3. Dispositif selon la revendication 1, **caractérisé en ce que** l'un des n dispositifs de régénération est réalisé sous la forme d'un dispositif de régénération d'horloge (3) et que n-1 dispositifs de régénération sont à chaque fois réalisés sous la forme de dispositifs de régénération de phase (4.2, ..., 4.n), la sortie d'horloge du dispositif de régénération d'horloge étant reliée avec une entrée d'horloge respective des n-1 dispositifs de régénération de phase.

4. Dispositif selon l'une des revendications précédentes, **caractérisé par** :

   - n dispositifs multiplexeurs (9.1, ..., 9.n) pour convertir les données (D2.1, ..., D2.n) régénérées divisées en un flux de données (D3.1, ..., D3.n) régénéré série correspondant, les x·m sorties de données parallèles (8.1, ..., 8.m) du dispositif de commande du temps de propagation étant respectivement reliées avec x·m entrées de données parallèles des n dispositifs multiplexeurs (9.1, ..., 9.n) ; et
   - un synthétiseur (10), l'entrée du synthétiseur (10) étant reliée avec une entrée d'horloge correspondante des dispositifs multiplexeurs (9.1, ..., 9.n) et la sortie d'horloge de l'au moins un dispositif de commande du temps de propagation (7.1), et une sortie du synthétiseur (10) étant reliée avec une autre entrée d'horloge correspondante des dispositifs multiplexeurs (9.1, ..., 9.n).

5. Dispositif selon la revendication 4, **caractérisé en ce qu'**au moins l'un des n dispositifs multiplexeurs (9.1) présente une sortie d'horloge série, un signal d'horloge série (C3*.1) supplémentaire étant délivré par le biais de la sortie d'horloge série, lequel est adapté au flux de données (D3.1, ..., D3.n) régénéré série et est retardé par rapport à un signal d'horloge série (C3.1) pouvant être généré au moyen du synthétiseur (10).

6. Dispositif selon l'une des revendications 4 ou 5, **caractérisé en ce qu'**un dispositif décodeur est à chaque fois connecté entre les dispositifs de commande du temps de propagation (7.1, ..., 7.n) et les dispositifs multiplexeurs (9.1, ..., 9.n).

7. Procédé pour compenser les différences de temps de propagation dans un dispositif selon l'une des revendications précédentes, n flux de données en série (n = 2, 3, ...) étant à chaque fois transmis par le biais de lignes optiques parallèles (1.1, ..., 1. n) et des données transmissibles (D01.1, ..., D01.n) étant formées sous la forme de mots de m bits (m = 1, 2, ...) au moyen des n flux de données en série, le procédé présentant les étapes suivantes :

   - réception des données (D0.1, ..., D0.n) à l'aide des n dispositifs de régénération (2.1, ..., 2.n ou 3, 4.2, ..., 4.n),

   **caractérisé par**

   - la régénération des données et d'une horloge des données (D0.1, ..., D0.n) reçues dans celui correspondant des n dispositifs de régénération (2.1, ..., 2.n ou 3, 4.2, ..., 4.n),
   - la transmission des données régénérées (D1.1, ..., D1.2) et de l'horloge régénérée (C1.1, ..., C1.n) à un dispositif de commande du temps de propagation (7.1, ..., 7.n) correspondant,
   - la division des données (D1.1, ..., D1. n) régénérées et de l'horloge (C1.1, ..., C1.n) régénérée dans un rapport 1: (x·m) (x = 1, 2, ...) au moyen d'un démultiplexeur correspondant et
   - la répartition des données (D2.1, ..., D2.n) régénérées divisées sur les sorties de données parallèles (8.1, ..., 8.m) du dispositif de commande du temps de propagation (7.1, ..., 7.n) correspondant.

*Fig.1*

*Fig.2*

*Fig.3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 533091 A

**In der Beschreibung aufgeführte Nicht-Patentliteratur**

- Long-Distance Parallel Data Link Using WDM Transmission with Bit-Skew Compensation. *Journal of Lightwave Technology,* Mai 1996, vol. 14 (5